# EUROPÄISCHE PATENTSCHRIFT

(11) **EP 0 261 319 B1**
(45) Veröffentlichungstag und Bekanntmachung des Hinweises auf die Patenterteilung: **25.08.1993**
(21) Anmeldenummer: 87109023.9
(22) Anmeldetag: 23.06.1987
(51) Int. Cl.: H02M 3/335, H02M 7/537, H04M 19/04

(54) **Schaltungsanordnung zur Erzeugung einer Wechselspannung**
Circuit arrangement for producing an AC voltage
Disposition de circuit pour produire une tension alternative

(30) Priorität: 26.09.1986 DE 3632746
(43) Veröffentlichungstag der Anmeldung: 30.03.1988
(73) Patentinhaber: KE KOMMUNIKATIONS-ELEKTRONIK GMBH & CO, D-30179 Hannover (DE)
(72) Erfinder: Chahabadi, Ziaedin, Dr.-Ing., D-3252 Bad Münder 1 (DE); Brahms, Martin, Dipl.-Ing., D-3000 Hannover 91 (DE); Wittur, Olaf, Dipl.-Ing., D-3000 Hannover (DE)
(74) Vertreter: Döring, Roger, Dipl.-Ing.

(56) Entgegenhaltungen:
- EP-A- 0 134 867
- CA-A- 982 714
- FR-A- 2 554 660
- ELECTRON ENGINEERING, Band 50, Nr. 603, März 1978, Seiten 59-64; P.J. FITZ: "Inverter ciruits and control techniques"

## Beschreibung

Die Erfindung bezieht sich auf ein elektronisches Gerät mit einer Schaltungsanordnung zur Erzeugung einer Wechselspannung in dem Gerät, das über eine Fernspeisung an eine Gleichspannung angeschlossen ist und zu einem System zur Übertragung digitaler Signale gehört, die über eine mit dem Gerät verbundene Anschlußleitung übertragen werden.

Eine solche Schaltungsanordnung kann beispielsweise zur Erzeugung der Rufspannung bei dem von der Deutschen Bundespost eingesetzten "PCM 2"-Verfahren verwendet werden, bei dem zwei räumlich benachbarte Teilnehmer des öffentlichen Fernmeldenetzes gemeinsam über eine Anschlußleitung mit dem Amt verbunden sind. Die weiteren Erläuterungen werden - stellvertretend für alle möglichen anderen Anwendungsfälle der Erfindung - für dieses System gemacht. Die Buchstaben "PCM" stehen für das bekannte Puls-Code-Modulations-Verfahren, mit dem nachrichtentechnische Signale als digitale Signale übertragen werden.

Beim PCM 2-Verfahren werden die analogen Signale im Amt digitalisiert und auf die Anschlußleitung gegeben. Am Ende der Anschlußleitung ist ein Gerät installiert, durch das die ankommenden digitalen Signale wieder in analoge Signale umgesetzt werden. Das gilt selbstverständlich auch für die Gegenrichtung. An das Gerät sind die beiden Teilnehmer mit Verbindungsleitungen angeschlossen.

Wegen der digitalen Übertragung der Signale können beide Teilnehmer ohne gegenseitige Störung gleichzeitig telefonieren, Die beiden Signalströme werden dabei in bekannter Technik am Anfang der Anschlußleitung "verschachtelt" und am Ende derselben wieder getrennt. Da die Rufspannung wegen der digitalen Signalübertragung nicht über die Anschlußleitung übertragen werden kann, muß sie im Gerät erzeugt werden.

In der CA-982 714 ist eine Schaltungsanordnung zur Erzeugung eines hörbaren Tons in einem Telefonsystem beschrieben, das an eine von einer Wechselspannung überlagerte Gleichspannung angeschlossen ist. Die Frequenz dieser Wechselspannung soll als hörbarer Ton wiedergegeben werden. Der Frequenzbereich dieses Tons wird begrenzt, um den Einfluß externer Signale zu vermeiden, wie beispielsweise die von Starkstromleitungen induzierten Geräusche.

Aus der FR-25 54 660 geht eine Schaltungsanordnung für einen Rufsignalgenerator einer Fernsprechnebenstellenanlage hervor. Aus dem Schleifenstrom einer Amtsleitung wird hier eine Gleichspannung abgeleitet, die durch Zerhacken mittels einer Transistorschaltung in eine Rufspannung umgesetzt wird. Das wird aus der Nebenstellenanlage gesteuert. Die an der Amtsleitung anstehende Spannung wird außerdem durch einen einen Komparator enthaltenden Sperrwandler hochtransformiert. Für die Funktion dieser Schaltungsanordnung ist von Bedeutung, daß die Spannung an der Amtsleitung im Wechsel immer wieder zusammenbricht.

Der Erfindung liegt die Aufgabe zugrunde, die eingangs geschilderte Schaltungsanordnung so zu gestalten, daß am Ende einer digitalen Übertragungsstrecke von nachrichtentechnischen Signalen auf einfache und kompakte Weise eine Wechselspannung erzeugt werden kann.

Diese Aufgabe wird gemäß der Erfindung dadurch gelöst,
- daß in dem Gerät ein Stromversorgungsteil angeordnet ist, das eine Spannung zum Betrieb der Elektronik des Geräts und zur Stromversorgung für mindestens einen externen Verbraucher erzeugt,
- daß in dem Gerät außerdem ein Taktgeber vorhanden ist, dessen Impulse über einen Eingang eines Steuergliedes der Steuerelektrode eines Transistors zugeführt werden, in dessen Strompfad die Primärwicklung eines Transformators liegt,
- daß an die Sekundärwicklung des Transformators in zwei unterschiedlichen Strompfaden je eine Diode mit nachgeschaltetem Kondensator angeschlossen sind,
- daß der in Reihe mit einem Koppelkondensator liegende Verbraucher parallel zu dem ersten Kondensator und zum Strompfad eines Entladetransistors anschaltbar ist, an dessen Steuerelektrode der zweite Kondensator angeschlossen ist, zu dem ein ohmscher Widerstand parallel geschaltet ist,
- daß parallel zu dem ersten Kondensator weiterhin ein den Momentanwert der Spannung an diesem Kondensator als Istwert erfassender Spannungsteiler angeschlossen ist, mit dessen Teilerpunkt ein Komparator mit einem ersten Eingang verbunden ist, dem über einen zweiten Eingang eine Wechselspannung als Sollwert zugeführt wird, und
- daß der Ausgang des Komparators mit dem anderen Eingang des Steuergliedes verbunden ist.

Diese Schaltungsanordnung kommt bei einfachem Aufbau mit wenigen Einzelteilen aus. Sie ist daher auf engstem Raum unterzubringen, so daß die Abmessungen des Geräts, in welchem die Schaltungsanordnung untergebracht ist, klein gehalten werden können. Die Schaltungsanordnung arbeitet mit hohem Wirkungsgrad, da fast nur Wechselstromanteile in Wirkleistung umgesetzt werden. Die jeweils beim Entladevorgang abzubauende Energie kann mit Vorteil der Stromversorgung des Geräts wieder zugeführt werden.

Vorteilhafte Ausgestaltungen der Erfindung gehen aus den Unteransprüchen hervor.

Ein Ausführungsbeispiel des Erfindungsgegenstandes ist in den Zeichnungen dargestellt.

Es zeigen:
Fig. 1 als Blockschaltbild die Teile eines ferngespeisten Gerätes mit einer Schaltungsanordnung nach der Erfindung.
Fig. 2 die Schaltungsanordnung selbst.

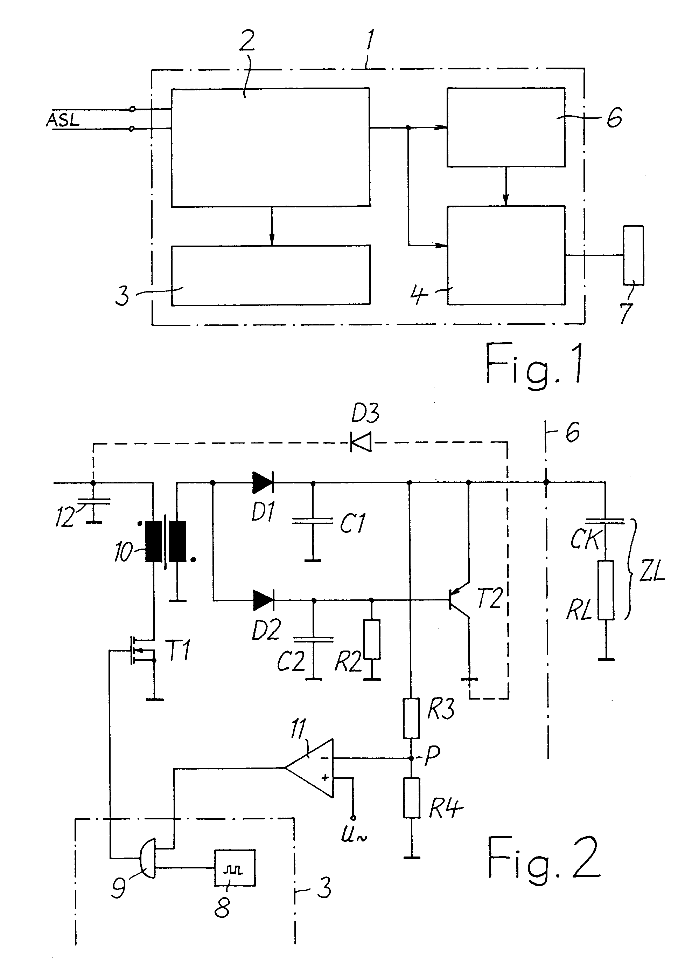

Am Ende einer beispielsweise durch eine Fernmelde-Anschlußleitung ASL gebildeten Übertragungsstrecke ist ein durch eine strichpunktierte Linie angedeutetes Gerät 1 angeschlossen. Das Gerät 1 wird beispielsweise mit einer Spannung von 93 V über die Anschlußleitung ASL ferngespeist. An die Fernspeisung ist ein Stromversorgungsteil 2 angeschlossen, bei dem es sich beispielsweise um ein Schaltnetzteil handeln kann. Das Stromversorgungsteil 2 kann eine niedrigere Spannung von beispielsweise ± 5 V, an welche die Elektronik 3 des Geräts 1 angeschlossen ist, und eine höhere Spannung von beispielsweise 20 V liefern, an welche eine Stromquelle 4 und eine Schaltungsanordnung 6 zur Erzeugung einer Wechselspannung angeschlossen sind. Grundsätzlich reicht es auch aus, wenn das Stromversorgungsteil 2 nur eine Spannung liefert, an die alle Bauteile des Geräts 1 angeschlossen sind. An die Stromquelle 4 ist ein externer Verbraucher 7 angeschlossen. Die Schaltungsanordnung 6 ist in Fig. 2 genauer dargestellt.

Die Schaltungsanordnung wird am Beispiel des PCM 2-Systems erläutert, wobei statt des Wortes "Wechselspannung" das Wort "Rufspannung" verwendet wird. Der Verbraucher 7 ist dabei der Wecker eines Telefonapparates, der durch einen Koppelkondensator CK und einen Widerstand (Last) RL realisiert ist, die zusammen die Weckerimpedanz ZL bilden.

Die Rufspannung von beispielsweise 25 bis 35 V effektiv mit 25 oder 50 Hz wird im Falle eines beim Amt ankommenden Anrufs für einen der Teilnehmer, bei welchem das am Gerät 1 angeschlossene Telefon installiert ist, durch ein vom Amt ausgesendetes Signal erzeugt, bei dem es sich um ein Bit des vom Amt zum Teilnehmer übermittelten Datenstroms handeln kann. Der Datenstrom wird im Gerät 1 empfangen und in demselben in der Elektronik 3 verarbeitet. Die Elektronik 3 hat einen Taktgeber 8, von dem Impulse von beispielsweise 64 kHz abgeleitet werden.

Die Impulse werden über ein ebenfalls in der Elektronik 3 vorhandenes Steuerglied 9, das die Impulse durchläßt oder nicht, der Steuerelektrode eines Transistors 1 zugeführt, in dessen Strompfad die Primärwicklung eines Transformators 10 liegt. Das Steuerglied 9 kann beispielsweise eine UND-Verknüpfung sein. Als Transistor T1 wird vorzugsweise ein Feldeffekttransistor, insbesondere ein MOSFET, verwendet. Es kann aber auch ein bipolarer Transistor eingesetzt werden. Der Transistor T1 wird durch die Impulse abwechselnd stromdurchlässig oder stromundurchlässig. Die dadurch vom Transformator 10 induzierte Spannung wird sekundärseitig über zwei in unterschiedlichen Strompfaden liegende Dioden D1 und D2 gleichgerichtet und jeweils zum Aufladen eines nachgeschalteten Kondensators C1 und C2 verwendet.

Der erste Kondensator C1 ist über den Koppelkondensator CK direkt an die zu treibende Last (Widerstand RL) angeschlossen, während der andere Kondensator C2 mit der Steuerelektrode eines Entladetransistors T2 verbunden ist, der mit seinem Strompfad parallel zum Koppelkondensator CK und zum ersten Kondensator C1 liegt. Parallel zu dem zweiten Kondensator C2 ist ein Widerstand R2 angeschlossen, dessen Widerstandswert groß ist im Verhältnis zum Betrag der Impedanz ZL. Der Widerstandswert von R2 wird durch den Stromverstärkungsfaktor des Entladetransistors T2 bestimmt.

Der Entladetransistor T2 ist als bipolarer Transistor dargestellt. Er kann durch eine Darlingtonschaltung ersetzt werden. Es kann aber auch hier ein Feldeffekttransistor, insbesondere ein MOSFET, eingesetzt werden.

Die Schaltungsanordnung nach der Erfindung arbeitet wie folgt:
Nach Empfang eines über die Anschlußleitung ASL kommenden, vom Amt ausgesandten Signals beginnt der Taktgeber 8 Impulse auszusenden. Diese Impulse werden vom Steuerglied 9 durchgelassen, da am Kondensator C1 keine Spannung anliegt. Der Komparator 11 gibt an seinem Ausgang dann beispielsweise eine logische "1" ab. Das geschieht solange, wie die Spannung am Kondensator C1 niedriger als die dem Komparator 11 über seinen zweiten Eingang als Sollwert zugeführte Wechselspannung ist.

Durch die Impulse des Taktgebers 8 wird der Transistor T1 in dauerndem Wechsel stromdurchlässig und stromundurchlässig geschaltet. Die dadurch vom Transformator 10 induzierte Spannung lädt nach Gleichrichtung durch die Dioden D1 und D2 die beiden Kondensatoren C1 und C2 auf. Die am Kondensatoren C1 anliegende Spannung wird dauernd durch den Spannungsteiler R3/R4 erfaßt und dem Komparator 11 als Istwert (Punkt P) zugeführt. Wenn die Spannung am Kondensator C1 den Sollwert überschreitet, erscheint am Ausgang des Komparators 11 eine logische "0". Das Steuerglied 9 wird dadurch gesperrt, so daß die Impulse des Taktgebers 8 nicht mehr zum Transistor T1 gelangen. Der Ladevorgang für die Kondensatoren C1 und C2 ist damit unterbrochen.

Mit dem Kondensator C1 wird gleichzeitig der parallel liegende Koppelkondensator CK aufgeladen. Wenn nun der Ladevorgang unterbrochen ist, wird der Kondensator C2 schnell über den Widerstand R2 entladen. Die Spannung an der Steuerelektrode des Transistors T2 sinkt schnell ab, so daß derselbe stromdurchlässig wird und dadurch den Koppelkondensator CK sowie den Kondensator C1 entlädt. Die Spannung am Spannungsteiler R3/R4 sinkt dann so weit ab, daß am Ausgang des Komparators 11 wieder eine logische "1" ansteht. Die Impulse des Taktgebers 8 gelangen wieder zum Transistor T1 und die Kondensatoren C1, C2 und CK werden wieder geladen. Dieser Vorgang läuft im dauernden Wechsel ab, bis der Taktgeber 8 abgeschaltet wird.

Die über den Entladetransistor T2 abzubauende Energie des Koppelkondensators CK kann über eine Diode D3 zur Spannungsversorgung (höhere Spannung des Stromversorgungsteils 2) zurückgeführt werden, sofern jeder Momentanwert der an RL anliegenden Spannung größer als die Betriebsspannung ist. Der Kondensator 12 ist ein Element des Stromversorgungsteils 2.

## Patentansprüche

1. Elektronisches Gerät mit einer Schaltungsanordnung zur Erzeugung einer Wechselspannung in dem Gerät, das über eine Fernspeisung an eine Gleichspannung angeschlossen ist und zu einem System zur Übertragung digitaler Signale gehört, die über eine mit dem Gerät verbundene Anschlußleitung übertragen werden, dadurch gekennzeichnet,
- daß in dem Gerät (1) ein Stromversorgungsteil (2) angeordnet ist, das eine Spannung zum Betrieb der Elektronik (3) des Geräts (1) und zur Stromversorgung für mindestens einen externen Verbraucher (7) erzeugt,
- daß in dem Gerät (1) außerdem ein Taktgeber (8) vorhanden ist, dessen Impulse über einen Eingang eines Steuergliedes (9) der Steuerelektrode eines Transistors (T1) zugeführt werden, in dessen Strompfad die Primärwicklung eines Transformators (10) liegt,
- daß an die Sekundärwicklung des Transformators (10) in zwei unterschiedlichen Strompfaden je eine Diode (D1,D2) mit nachgeschaltetem Kondensator (C1,C2) angeschlossen sind,
- daß der in Reihe mit einem Koppelkondensator (CK) liegende Verbraucher parallel zu dem ersten Kondensator (C1) und zum Strompfad eines Entladetransistors (T2) anschaltbar ist, an dessen Steuerelektrode der zweite Kondensator (C2) angeschlossen ist, zu dem ein ohmscher Widerstand (R2) parallel geschaltet ist,
- daß parallel zu dem ersten Kondensator (C1) weiterhin ein den Momentanwert der Spannung an diesem Kondensator (C1) als Istwert erfassender Spannungsteiler (R3, R4) angeschlossen ist, mit dessen Teilerpunkt (P) ein Komparator (11) mit einem ersten Eingang verbunden ist, dem über einen zweiten Eingang eine Wechselspannung als Sollwert zugeführt wird, und
- daß der Ausgang des Komparators (11) mit dem anderen Eingang des Steuergliedes (9) verbunden ist.

2. Schaltungsanordnung nach Anspruch 1, dadurch gekennzeichnet, daß der über den Entladetransistor (T2) gelenkte Strom zur Stromversorgung des Geräts (1) zurückgeführt wird.

3. Schaltungsanordnung nach Anspruch 1 oder 2, dadurch gekennzeichnet, daß der Transistor (T1) als Feldeffekttransistor, vorzugsweise als MOSFET, ausgebildet ist.

4. Schaltungsanordnung nach Anspruch 1 oder 2, dadurch gekennzeichnet, daß der Transistor (T1) als bipolarer Transistor ausgebildet ist.

5. Schaltungsanordnung nach einem der Ansprüche 1 bis 4, dadurch gekennzeichnet, daß der Entladetransistor (T2) als Feldeffekttransistor, vorzugsweise als MOSFET, ausgebildet ist.

6. Schaltungsanordnung nach einem der Ansprüche 1 bis 4, dadurch gekennzeichnet, daß an Stelle des Entladetransistors (T2) eine Darlingtonschaltung eingesetzt ist.

7. Schaltungsanordnung nach einem der Ansprüche 1 bis 6, dadurch gekennzeichnet, daß das Stromversorgungsteil (2) als Schaltnetzteil ausgebildet ist.

## Claims

1. Electronic devise having a circuit arrangement for generating an AC voltage in the device, which device is connected via a power feed to a DC voltage and belongs to a system for transmitting digital signals which are transmitted via a branch line connected to the device, characterised in that
- there is arranged in the device (1) a power supply unit (2) which generates a voltage for operating the electronics (3) of the device (1) and for supplying power for at least one external load (7),
- there is present in addition in the device (1) a clock generator (8) whose pulses are fed via an input of a control element (9) to the gate electrode of a transistor (T1) in the current path of which the primary winding of a transformer (10) is situated,
- in that in two different current paths one diode (D1, D2) each, having a downstream capacitor (C1, C2), is connected to the secondary winding of the transformer (10),
- in that the load connected in series with a coupling capacitor (CK) can be connected in parallel with the first capacitor (C1) and with the current path of a discharging transistor (T2) to the gate electrode of which there is connected the second capacitor (C2), with which an ohmic resistor (R2) is connected in parallel,
- in that furthermore there is connected in parallel with the first capacitor (C1) a voltage divider (R3, R4) which detects the instantaneous value of the voltage at this capacitor (C1) as actual value and to the dividing point (P) of which there is connected a comparator (11) having a first input to which an AC voltage is fed as desired value via a second input, and
- in that the output of the comparator (11) is connected to the other input of the control element (9).

2. Circuit arrangement according to Claim 1, characterised in that the current directed via the discharging transistor (T2) is fed back to the power supply of the device (1).

3. Circuit arrangement according to Claim 1 or 2, characterised in that the transistor (T1) is constructed as a field effect transistor, preferably as a MOSFET.

4. Circuit arrangement according to Claim 1 or 2, characterised in that the transistor (T1) is constructed as a bipolar transistor.

5. Circuit arrangement according to one of Claims 1 to 4, characterised in that the discharging transistor (T2) is constructed as a field effect transistor, preferably as a MOSFET.

6. Circuit arrangement according to one of Claims 1 to 4, characterised in that a Darlington pair circuit is used instead of the discharging transistor (T2).

7. Circuit arrangement according to one of Claims 1 to 6, characterised in that the power supply unit (2) is constructed as a switched-mode power supply.

## Revendications

1. Appareil électronique qui comporte un dispositif de circuit pour produire une tension alternative dans l'appareil, qui, par l'intermédiaire d'une téléalimentation, est relié à une tension continue et qui appartient à un système de transmission de signaux numériques qui sont transmis par l'intermédiaire d'une ligne d'abonnée reliée avec l'appareil, appareil caractérisé par le fait,
- que dans l'appareil (1) est disposé un bloc d'alimentation (2) qui produit une tension pour le fonctionnement du circuit électronique (3) de l'appareil (1) et pour l'alimentation en courant d'au moins un récepteur extérieur (7),
- que dans l'appareil (1) existe en outre un émetteur (8) de signal d'horloge dont les impulsions sont, par l'intermédiaire d'une entrée d'un élément de commande (9), amenées à la gâchette d'un transistor (C1) sur le chemin du courant duquel se trouve le bobinage primaire d'un transformateur (10),
- qu'au bobinage secondaire du transformateur (10) sont reliées, sur chacun de deux chemins différents du courant, une diode (D1,D2) avec un condensateur (C1,C2) monté en aval,
- que le récepteur, monté en série avec un condensateur de couplage (CK), peut être relié en parallèle avec le premier condensateur (C1) et avec le chemin du courant d'un transistor de décharge (C2) à la gâchette duquel est relié le second condensateur (C2) parallèlement auquel est montée une résistance ohmique (R2),
- qu'en parallèle avec le premier condensateur (C1) est en outre monté un diviseur de tension (R3, R4) qui saisit en tant que valeur réelle la valeur instantanée de la tension à ce condensateur (C1) et au point de division (P) duquel est relié, par une première entrée, un comparateur (11) auquel, par une seconde entrée, est amenée, en tant que valeur prescrite, une tension alternative, et
- que la sortie du comparateur (11) est reliée avec l'autre entrée de l'élément de commande (9).

2. Dispositif de circuit selon la revendication 1, caractérisé par le fait que le courant dérivé par l'intermédiaire du transistor de décharge (T2) est ramené pour l'alimentation en courant de l'appareil (1).

3. Dispositif de circuit selon la revendication 1 ou 2, caractérisé par le fait que le transistor (T1) est conçu sous forme de transistor à effet de champ, de préférence sous forme de transistor MOSFET.

4. Dispositif de circuit selon la revendication 1 ou 2, caractérisé par le fait que le transistor (T1) est conçu sous forme de transistor bipolaire.

5. Dispositif de circuit selon l'une des revendications 1 à 4, caractérisé par le fait que le transistor de décharge (T2) est conçu sous forme de transistor à effet de champ, de préférence sous forme de transistor MOSFET.

6. Dispositif de circuit selon l'une des revendications 1 à 4, caractérisé par le fait qu'à la place du transistor de décharge (T2) on utilise un montage Darlington.

7. Dispositif de circuit selon l'une des revendications 1 à 6, caractérisé par le fait que le bloc d'alimentation (2) est conçu sous forme de bloc d'alimentation à découpage.
